# EUROPEAN PATENT SPECIFICATION

(11) **EP 4 310 615 B1**
(45) Date of publication and mention of the grant of the patent: **15.04.2026**
(21) Application number: 22771558.8
(22) Date of filing: 18.03.2022
(51) Int. Cl.: G05B 23/02, F24F 11/36, F24F 11/38, F24F 11/49, F24F 11/64, G05B 13/02

(54) **CORRECTION DEVICE, PREDICTION DEVICE, METHOD, PROGRAM, AND CORRECTION MODEL**
KORREKTURVORRICHTUNG, VORHERSAGEVORRICHTUNG, VERFAHREN, PROGRAMM UND KORREKTURMODELL
DISPOSITIF DE CORRECTION, DISPOSITIF DE PRÉDICTION, PROCÉDÉ, PROGRAMME ET MODÈLE DE CORRECTION

(30) Priority: 18.03.2021 JP 2021044569
(43) Date of publication of application: 24.01.2024
(73) Proprietor: Daikin Industries, Ltd., Osaka-shi, Osaka 530-0001 (JP)
(72) Inventor: YOSHIMI, Manabu, Osaka-shi, Osaka 530-8323 (JP); KASAHARA, Shinichi, Osaka-shi, Osaka 530-8323 (JP); KITADE, Hiroki, Osaka-shi, Osaka 530-8323 (JP)
(74) Representative: Hoffmann Eitle
(86) International application number: PCT/JP2022/012808
(87) International publication number: WO 2022/196813

(56) References cited:
- EP-A1- 3 441 916
- WO-A1-2014/192052
- JP-A- H06 289 179
- JP-B1- 6 791 429
- JP-B1- 6 791 429
- KR-A- 20210 025 365
- US-A1- 2007 192 078

## Description

### [Technical Field]

The present disclosure relates to a correction apparatus, a prediction apparatus, a method, a program, and a correction model.

### [Background Art]

A hitherto known system is configured to predict an operational state of a device such as an air conditioner from operational data of the device using a prediction model generated by machine learning, and control operations of the device or diagnose failures of the device (PTL 1).

PTL 2 describes a system for providing real-time modeling of an electrical system. The system includes a data acquisition component, a virtual system modeling engine, and an analytics engine. The data acquisition component is communicatively connected to a sensor configured to provide real-time measurements of data output from an element of the system. The virtual system modeling engine is configured to generate a predicted data output for the element. The analytics engine is communicatively connected to the data acquisition system and the virtual system modeling engine and is configured to monitor and analyze a difference between the real-time data output and the predicted data output.

PTL 3 describes a refrigerant amount determining device including: an operation data acquiring unit configured to acquire operation data of an air conditioning system; a calculating unit configured to calculate a refrigerant amount index value from the operation data acquired; an inferring unit configured to infer information regarding correction of the refrigerant amount index value using a correction model and at least one of the acquired operation data or the calculated refrigerant amount index value; and a determining unit configured to determine a refrigerant amount of the air conditioning system based on the information regarding correction of the refrigerant amount index value.

PTL 4 describes a correction method for a predicted wind speed of a wind farm. The correction method includes: establishing wind speed deviation matrixes of a plurality of existing wind farms respectively; establishing a wind speed deviation correction model library based on the plurality of wind speed deviation matrixes of the existing wind farms; determining relevant parameters of the target wind farm, determining a matched wind speed deviation correction model in the wind speed deviation correction model library based on the relevant parameters, and correcting the predicted wind speed of the target wind farm based on the determined wind speed deviation correction model.

### [Citation List]

### [Patent Literature]

[PTL 1] JP 2020-109581 A
[PTL 2] US 2007/192078 A1
[PTL 3] JP 6 791429 B1
[PTL 4] EP 3 441 916 A1

### [Summary of Invention]

### [Technical Problem]

However, in a case where there is a release of a totally new device or in a case where there is a new model of an existing device, there is no operational data to learn from. Therefore, in order to realize functions that use predicted values at the timing of device release, it is necessary to collect data to learn from, before the device release.

When collecting data by a field test, the test needs to be run for a long term in order to cover all assumed operational conditions. When collecting data by conducting a test, for which operational conditions are set, in a test room, a multitude of steps may be involved in the test. When acquiring operational data from the market after devices are released, functions that are to use predicted values cannot be used until when sufficient data has been collected to enable generation of a highly reliable prediction model.

According to the present disclosure, an object is to predict an operational state from operational data, when there is no operational data to learn from.

### [Solution to Problem]

This object is accomplished by the subject-matter of the independent claims. The dependent claims concern particular embodiments.

An apparatus according to a first aspect is an apparatus configured to perform correction regarding a predicted value for an operational state predicted from operational data of a device, and includes:
a provisional prediction model that is trained by machine learning based on training data including operational data and an operational state of a device different from the device; and
a correction unit configured to perform correction regarding the predicted value for the operational state of the device, the predicted value being predicted using the provisional prediction model.

According to the first aspect , it is possible to predict an operational state from operational data, when there is no operational data to learn from.

An apparatus according to a second aspect is the apparatus according to the first aspect,
wherein the correction unit generates a correction model configured to correct the predicted value for the operational state of the device, the predicted value being predicted using the provisional prediction model.

According to the second aspect , it is possible to generate a correction model for predicting an operational state from operational data by repurposing a prediction model for another device as a provisional prediction model, when there is no operational data to learn from for generating a prediction model.

An apparatus according to a third aspect is the apparatus according to the second aspect, and further includes:
an acquiring unit configured to acquire the predicted value for the operational state of the device by inputting the operational data of the device into the provisional prediction model to output the operational state of the device; and
an acquiring unit configured to acquire an actually measured value for the operational state of the device,
wherein the correction unit performs machine learning by associating the predicted value for the operational state of the device with the actually measured value for the operational state of the device.

According to the third aspect , it is possible to generate a correction model that is trained by machine learning by associating a predicted value for an operational state of a device with an actually measured value for the operational state of the device.

An apparatus according to a fourth aspect includes:
an operational data acquiring unit configured to acquire operational data of a device;
a provisional prediction model that is trained by machine learning based on training data including operational data and an operational state of a device different from the device;
a correction model configured to correct a predicted value for an operational state of the device, the predicted value being predicted using the provisional prediction model; and
a prediction unit configured to predict the predicted value for the operational state of the device from the operational data of the device using the provisional prediction model, and predict a corrected predicted value for the operational state of the device from the predicted value for the operational state of the device using the correction model.

According to the fourth aspect , it is possible to predict an operational state from operational data by diverting a prediction model for another device as a provisional prediction model, when there is no operational data to learn from for generating a prediction model.

An apparatus according to a fifth aspect is the apparatus according to the fourth aspect,
wherein the prediction unit acquires the predicted value for the operational state of the device by inputting the operational data of the device into the provisional prediction model such that the operational state of the device is output, and acquires the corrected predicted value for the operational state of the device by inputting the predicted value for the operational state of the device into the correction model such that the corrected predicted value for the operational state of the device is output.

According to the fifth aspect, it is possible to predict an operational state from operational data and predict a corrected predicted value from the operational state.

An apparatus according to a sixth aspect is the apparatus according to the fifth aspect,
wherein the prediction unit further inputs the operational data of the device into the correction model together with the predicted value for the operational state of the device.

According to the sixth aspect , it is possible to improve the prediction accuracy.

An apparatus according to a seventh aspect is the apparatus according to any of the fourth to sixth aspects,
wherein a device used for generating the correction model is a device that is same as and of a same device type as that of the device for which the prediction unit performs prediction.

According to the seventh aspect , it is possible to predict an operational state of a device from operational data using a correction model that is generated based on the same device.

An apparatus according to an eighth aspect is the apparatus according to any one of the fourth to sixth aspects,
wherein a device used for generating the correction model is one or a plurality of devices different from and of the same device type as that of the device for which the prediction unit performs prediction.

According to the eighth aspect , a lot of data are available for generating a correction model because the correction model is generated using operational data acquired from a different device that is the same device type. Therefore, the correction model can be expected to have an improved correction accuracy.

An apparatus according to a ninth aspect is the apparatus according to any one of the fourth to sixth aspects,
wherein a device used for generating the correction model includes a device that is same as and of a same device type as that of, and one or a plurality of devices different from and of the same device type as that of, the device for which the prediction unit performs prediction.

According to the ninth aspect , a lot of data are available for generating a correction model because the correction model is generated using operational data acquired from the same device and a different device. Moreover, the correction model can be expected to have an improved correction accuracy because operational data of the same device is also used.

An apparatus according to a tenth aspect is the apparatus according to any one of the fourth to ninth aspects, and further includes:
an updating unit configured to update the provisional prediction model and the correction model to a prediction model for the device.

According to the tenth aspect , after operational data have been sufficiently accumulated, it is possible to generate a prediction model for a device as a replacement.

An apparatus according to an eleventh aspect is the apparatus according to any one of the fourth to ninth aspects, and further includes:
an updating unit configured to update the correction model.

According to the eleventh aspect , it is possible to use the newest correction model.

An apparatus according to a twelfth aspect is the apparatus according to any one of the first to eleventh aspects,
wherein a device type of the device is a new device type of a device, which is of a device type different from that of the device.

According to the twelfth aspect , it is possible to predict an operational state from operational data of a new device type, using a correction model generated based on an old device type.

An apparatus according to a thirteenth aspect is the apparatus according to any one of the first to eleventh aspects,
wherein the device has a function similar to that of the device, which is of a device type different from that of the device.

According to the thirteenth aspect , it is possible to predict an operational state from operational data, using a correction model generated based on a device that is of a different device type but has a similar function.

An apparatus according to a fourteenth aspect is the apparatus according to any one of the first to thirteenth aspects,
wherein the device is an air conditioner.

According to the fourteenth aspect , it is possible to predict an operational state of an air conditioner from operational data of the air conditioner.

An apparatus according to a fifteenth aspect is the apparatus according to any one of the first to fourteenth aspects,
wherein the operational state is used for at least any one selected from leakage of a refrigerant from the device, a failure of the device, and control on the device.

According to the fifteenth aspect , it is possible to sense leakage of a refrigerant, sense a failure of the device, or control the device based on operational data of the device, when there is no operational data to learn from.

An apparatus according to a sixteenth aspect is the apparatus according to the fourth aspect,
wherein the prediction unit predicts a difference between the predicted value for the operational state of the device and an actually measured value for the operational state of the device.

According to the sixteenth aspect , it is possible to predict a corrected predicted value from a difference between a predicted value and an actually measured value.

An apparatus according to a seventeenth aspect is the apparatus according to the first aspect,
wherein the correction unit corrects an abnormality determination threshold by using the predicted value for the operational state of the device, the predicted value being predicted using the provisional prediction model.

According to the seventeenth aspect , it is possible to correct an abnormality determination threshold.

An apparatus according to an eighteenth aspect is the apparatus according to the first aspect,
wherein the correction unit corrects a control gain, the control gain being involved in a control using the predicted value for the operational state of the device, the predicted value being predicted using the provisional prediction model.

According to the eighteenth aspect , it is possible to correct a control gain for device control.

A method according to a nineteenth aspect is a method of performing correction regarding a predicted value for an operational state predicted from operational data of a device, and includes:
a step of performing correction regarding a predicted value for the operational state of the device, the predicted value being predicted using a provisional prediction model that is trained by machine learning based on training data including operational data and an operational state of a device different from the device.

A program according to a twentieth aspect causes a computer, which is configured to perform correction regarding a predicted value for an operational state predicted from operational data of a device, to function as:
a correction model generation unit configured to perform correction regarding a predicted value for the operational state of the device, the predicted value being predicted using a provisional prediction model that is trained by machine learning based on training data including operational data and an operational state of a device different from the device.

A method according to a twenty first aspect includes:
a step of acquiring operational data of a device; and
a step of predicting a corrected predicted value, which is a predicted value for an operational state of the device that is corrected, from the operational data of the device, using: a provisional prediction model that is trained by machine learning based on training data including operational data and an operational state of a device different from the device; and a correction model configured to correct the predicted value for the operational state of the device, the predicted value being predicted using the provisional prediction model.

A program according to a twenty second aspect causes a computer to function as:
an operational data acquiring unit configured to acquire operational data of a device; and
a prediction unit configured to predict a corrected predicted value, which is a predicted value for an operational state of the device that is corrected, from the operational data of the device, using: a provisional prediction model that is trained by machine learning based on training data including operational data and an operational state of a device different from the device; and a correction model configured to correct the predicted value for the operational state of the device, the predicted value being predicted using the provisional prediction model.

A correction model according to a twenty third aspect is a correction model configured to correct a predicted value for an operational state predicted from operational data of a device, and causes a computer to function to:
correct a predicted value for the operational state of the device, the predicted value being predicted using a provisional prediction model that is trained by machine learning based on training data including operational data and an operational state of a device different from the device.

### [Brief Description of Drawings]

[FIG. 1]

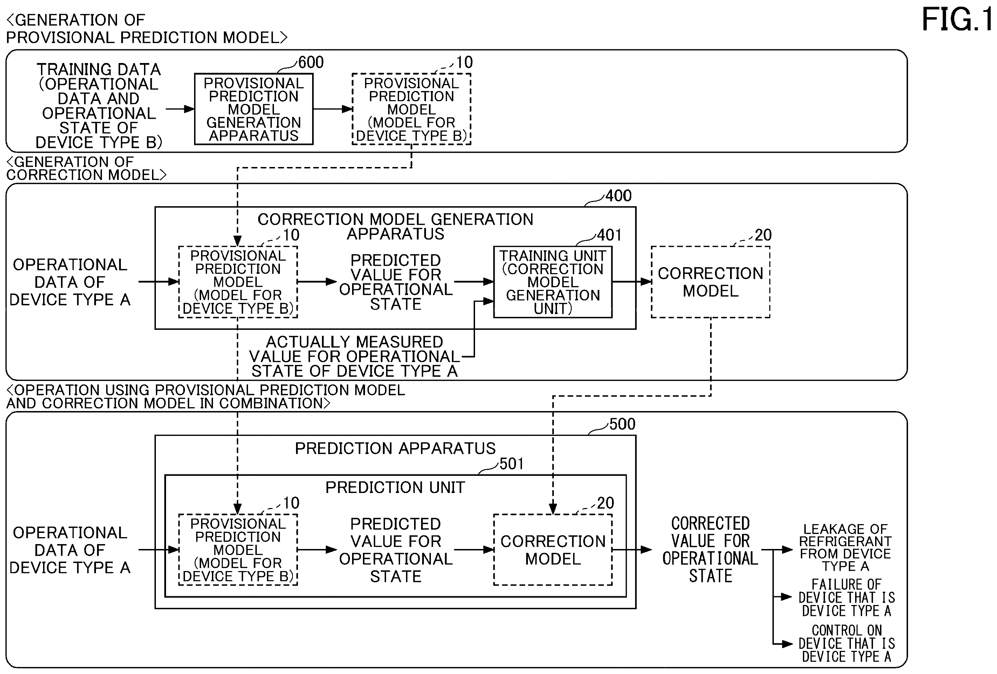

   FIG. 1 is a diagram illustrating an overview .
[FIG. 2]

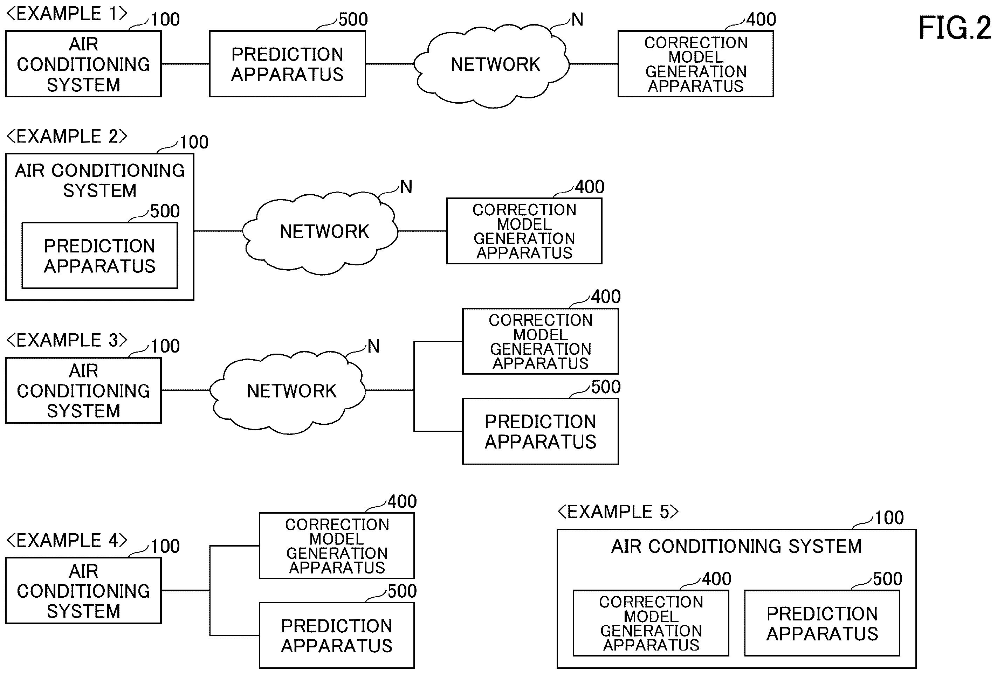

   FIG. 2 is an example of an overall configuration .
[FIG. 3]

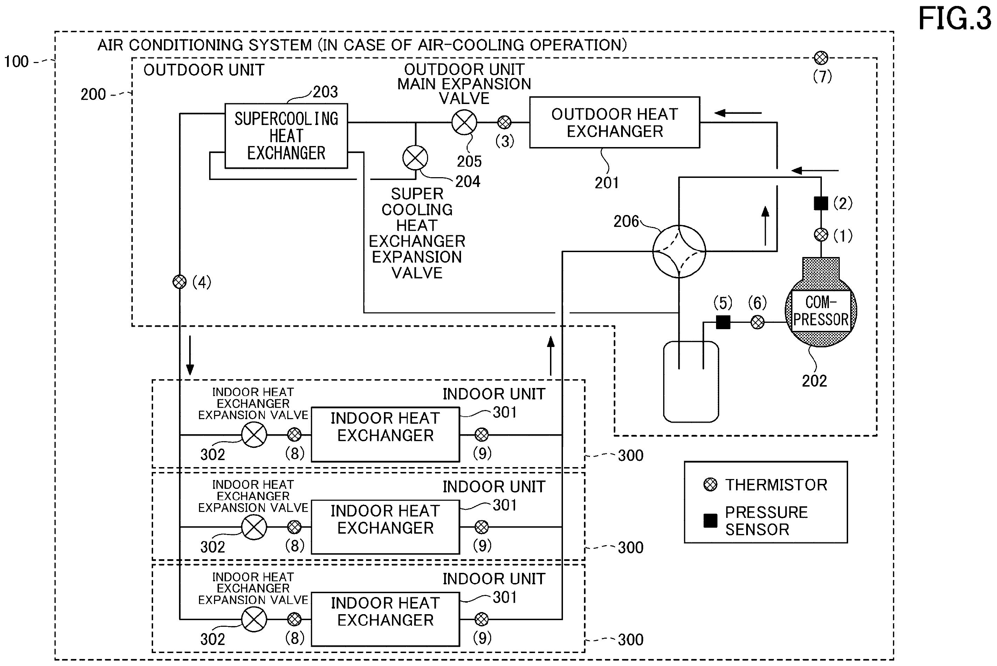

   FIG. 3 is a diagram of a hardware configuration of an air conditioning system (in a case of an air-cooling operation) according to an embodiment .
[FIG. 4]

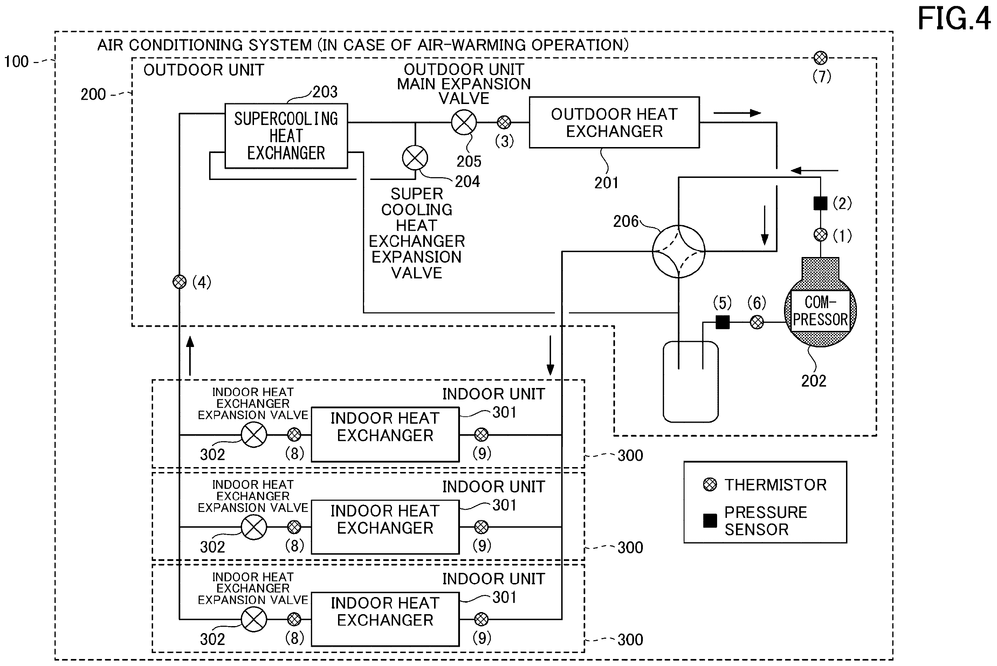

   FIG. 4 is a diagram of a hardware configuration of an air conditioning system (in a case of an air-warming operation) according to an embodiment .
[FIG. 5]

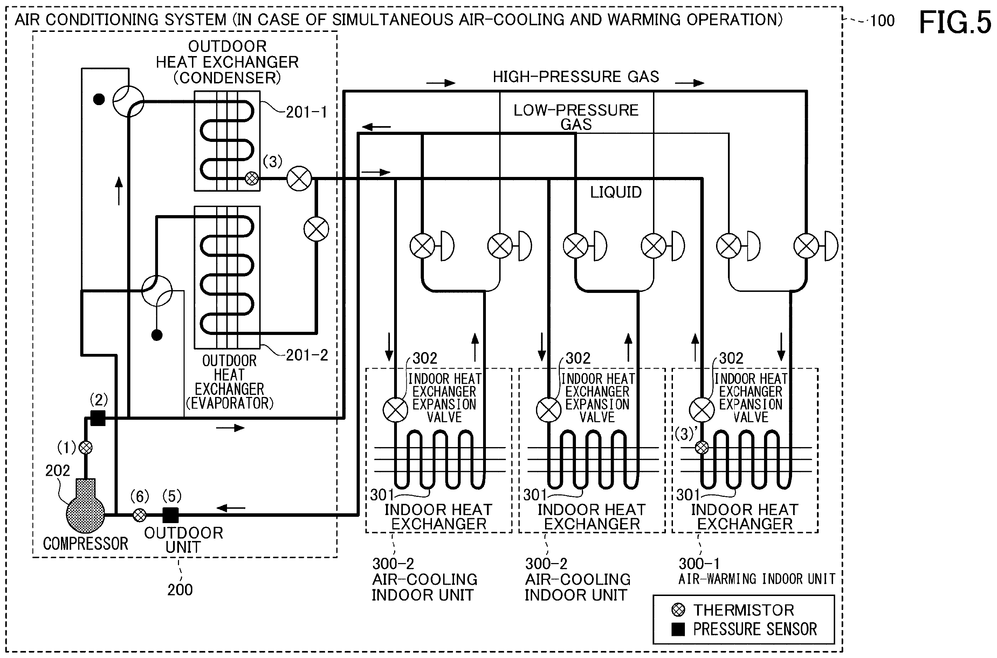

   FIG. 5 is a diagram of a hardware configuration of an air conditioning system (in a case of a simultaneous air-cooling and warming operation) according to an embodiment of the present disclosure.
[FIG. 6]

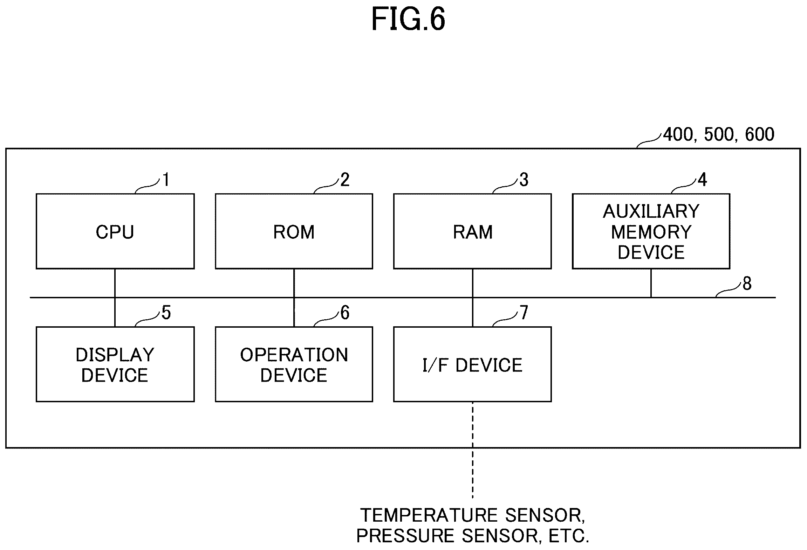

   FIG. 6 is a diagram of a hardware configuration of a correction model generation apparatus, a prediction apparatus, and a provisional prediction model generation apparatus according to an embodiment of the present disclosure.
[FIG. 7]

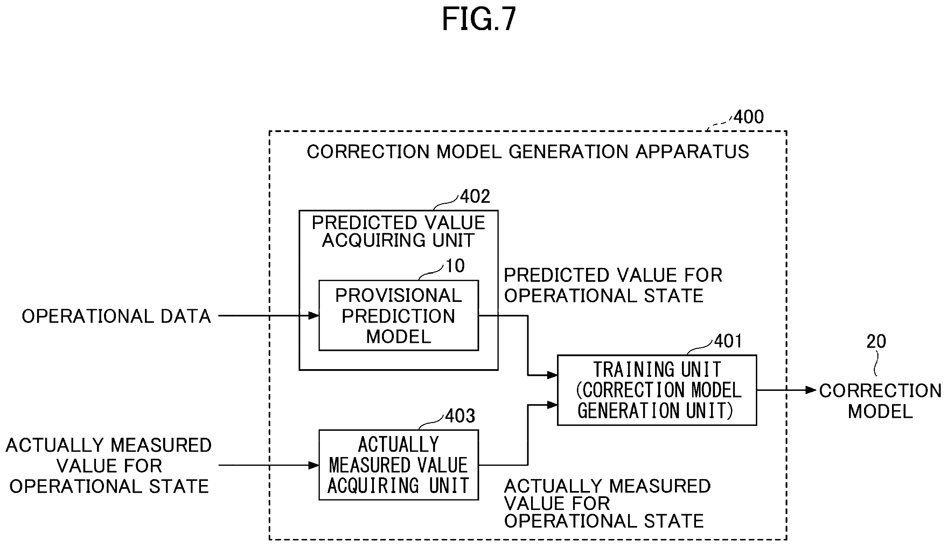

   FIG. 7 is a functional block diagram of a correction model generation apparatus according to an embodiment of the present disclosure.
[FIG. 8]

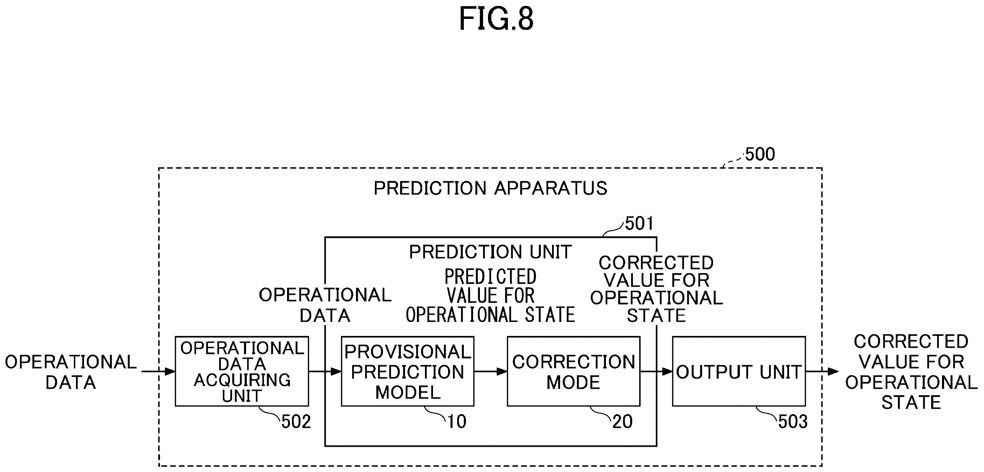

   FIG. 8 is a functional block diagram of a prediction apparatus according to an embodiment of the present disclosure.
[FIG. 9]

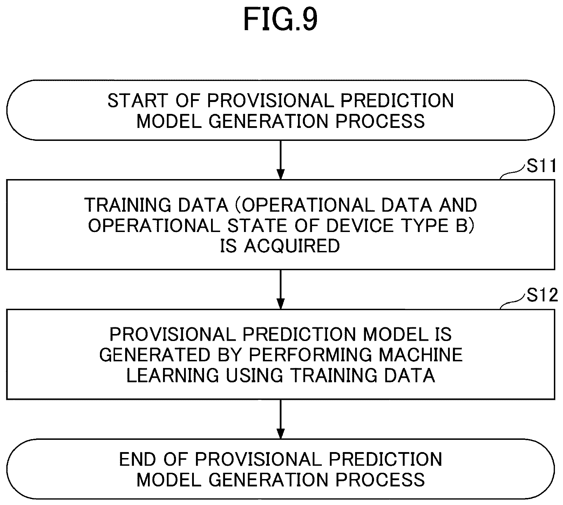

   FIG. 9 is a flowchart for a provisional prediction model generation process according to an embodiment of the present disclosure.
[FIG. 10]

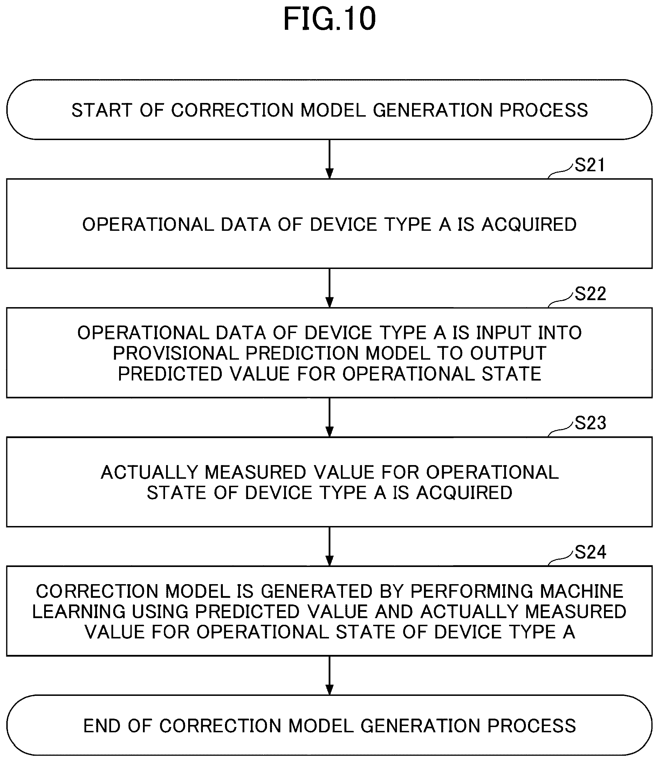

   FIG. 10 is a flowchart for a correction model generation process according to an embodiment of the present disclosure.
[FIG. 11]

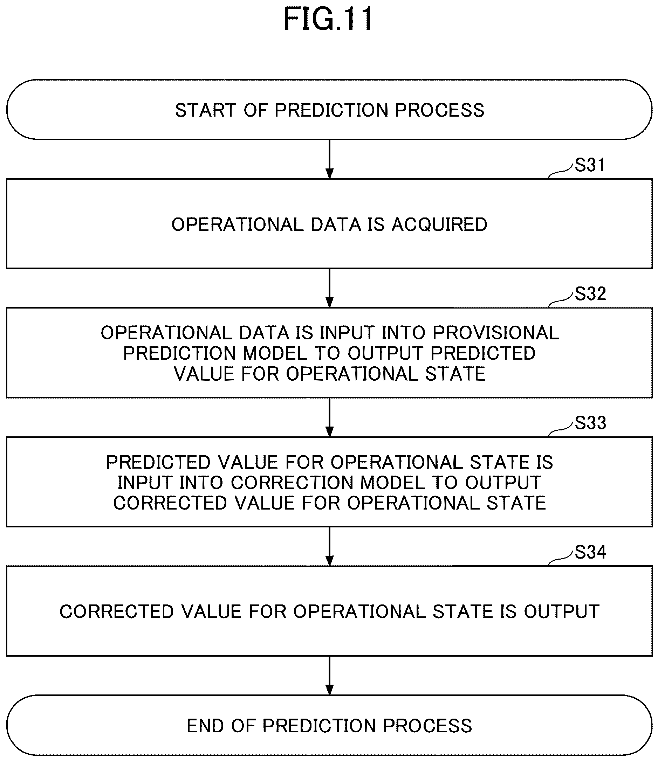

   FIG. 11 is a flowchart for a prediction process according to an embodiment of the present disclosure.
[FIG. 12]

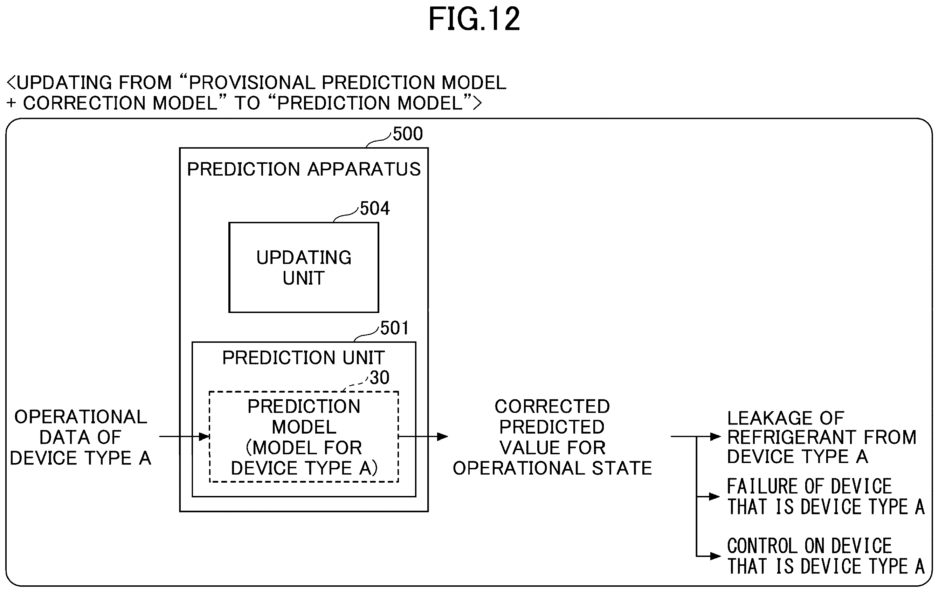

   FIG. 12 is a diagram illustrating updating of a provisional prediction model and a correction model to a prediction model according to an embodiment of the present disclosure.
[FIG. 13]

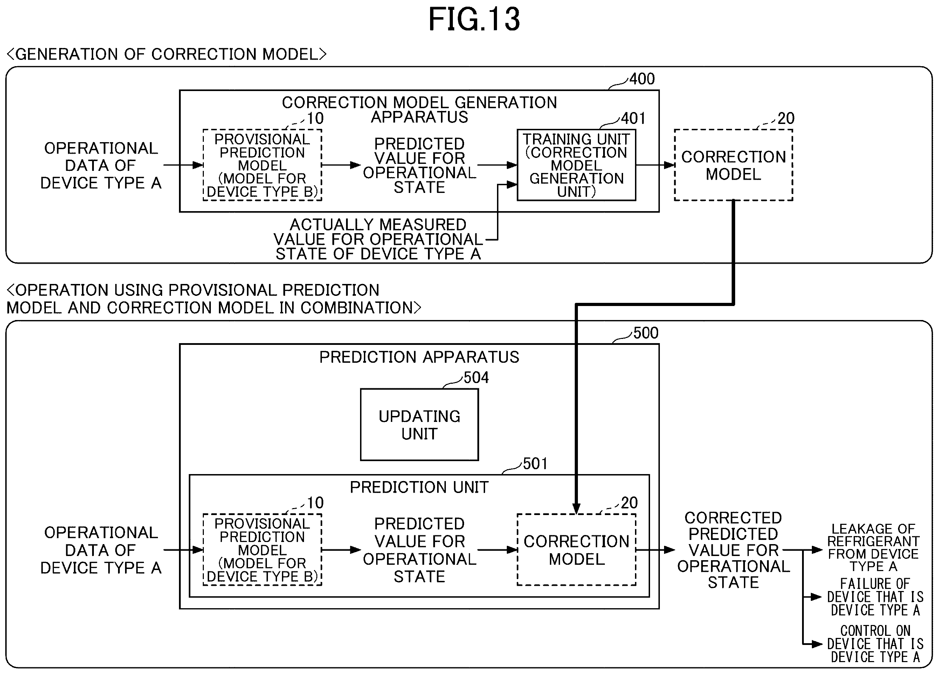

   FIG. 13 is a diagram illustrating updating of a correction model according to an embodiment of the present disclosure.
[FIG. 14]

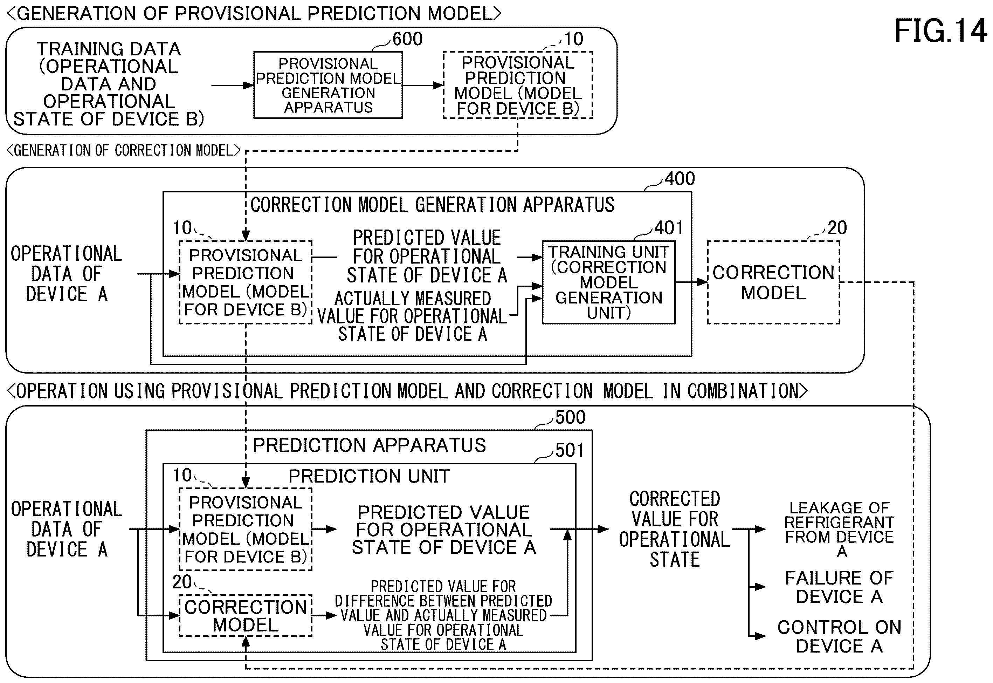

   FIG. 14 is a diagram illustrating another embodiment for generation of a correction model according to an embodiment of the present disclosure.
[FIG. 15]

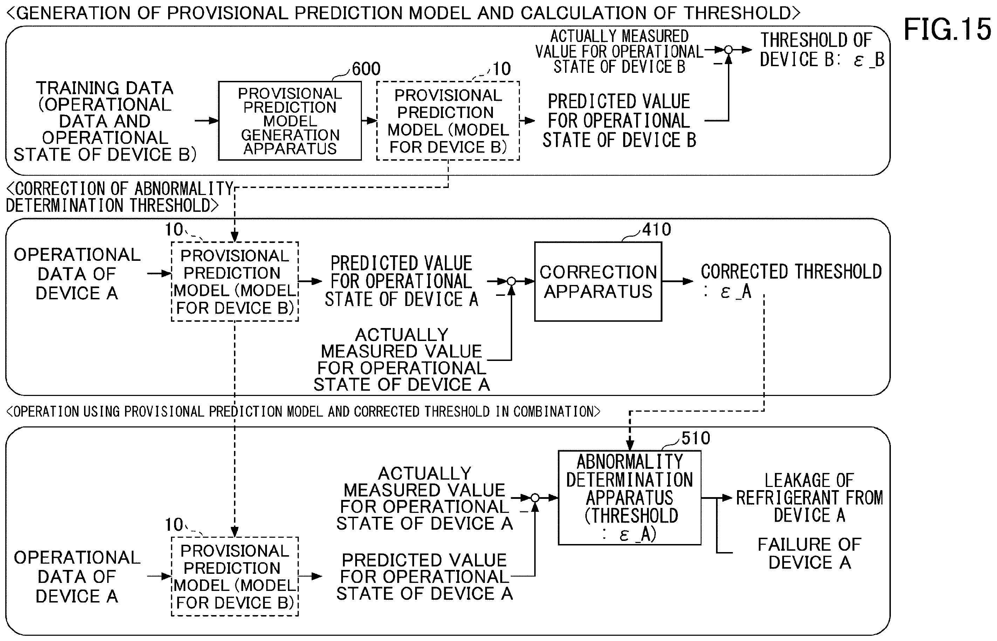

   FIG. 15 is a diagram illustrating correction of an abnormality determination threshold according to an embodiment of the present disclosure.
[FIG. 16]

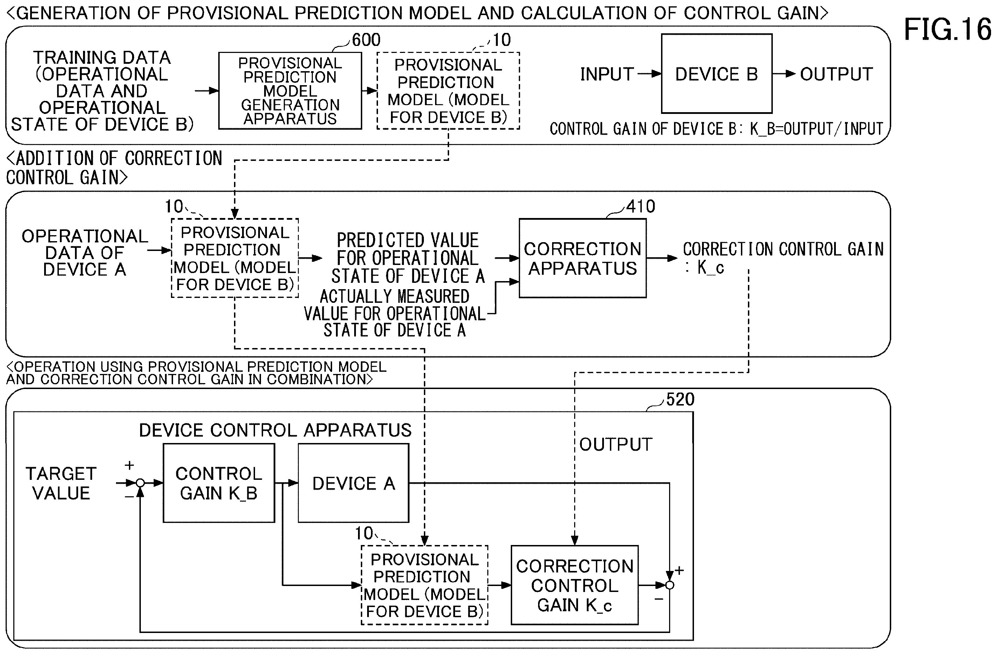

   FIG. 16 is a diagram illustrating correction of a control gain involved in device control according to an embodiment of the present disclosure.

### [Description of Embodiments]

Embodiments of the present disclosure will be described below with reference to the drawings.

An apparatus configured to perform correction regarding a predicted value for an operational state predicted from operational data of a device (hereinafter, the apparatus may also be referred to as a correction apparatus) will be described below. The correction apparatus includes a provisional prediction model that is trained by machine learning based on training data including operational data and an operational state of a device different from the device, and a correction unit configured to perform correction regarding a predicted value for the operational state of the device predicted using the provisional prediction model.

Specifically, the correction apparatus generates a correction model configured to correct a predicted value for the operational state of the device predicted using the provisional prediction model (embodiment 1). The correction apparatus can also correct an abnormality determination threshold using the predicted value for the operational state of the device predicted using the provisional prediction model (embodiment 2). The correction apparatus can correct a control gain involved in a control using the predicted value for the operational state of the device predicted using the provisional prediction model (embodiment 3).

### [Embodiment 1]

### <Overview>

FIG. 1 is a diagram illustrating an overview of the present disclosure. <Generation of provisional prediction model>, <Generation of correction model>, and <Operation using provisional prediction model and correction model in combination> will be described below in this order. For example, the device is an air conditioner. For example, a device type A is a new device type, and a device type B is an old device type.

### <Generation of provisional prediction model>

First, a provisional prediction model generation apparatus 600 generates a provisional prediction model 10. Specifically, the provisional prediction model generation apparatus 600 generates a provisional prediction model (i.e., a model for the device type B) 10 by performing machine learning using training data (specifically, by performing machine learning by associating operational data and an operational state of a device that is device type B with each other).

### <Generation of correction model>

Next, a correction model generation apparatus (an example of the correction apparatus) 400 generates a correction model 20. The correction model 20 is a model configured to correct a predicted value for an operational state.

Specifically, the correction model generation apparatus 400 acquires a predicted value for an operational state of a device that is device type A, by inputting operational data of the device that is device type A into the provisional prediction model (i.e., the model for the device type B) 10 to output an operational state. The correction model generation apparatus 400 acquires an actually measured value for the operational state of the device that is device type A (specifically, the actually measured value is an operational state calculated from the operational data of the device that is device type A). Then, the correction model generation apparatus 400 generates the correction model 20 by performing machine learning by associating the predicted value for the operational state of the device that is device type A with the actually measured value for the operational state of the device that is device type A (note that the machine learning may be performing by associating the predicted value for the operational state of the device that is device type A and the operational data of the device that is device type A with the actually measured value for the operational state of the device that is device type A). In this case, the operational data of the device type A necessary for generating the correction model is typically not operational data accumulated over a long period of time necessary for generating a prediction model for the device type A, and need only be operational data accumulated over a short period of time. For example, operational data acquired in a test room during development of the device type A, and data of a test operation during installation may be used.

### <Operation using provisional prediction model and correction model in combination>

Subsequently, the device that is device type A starts to be operated. A prediction apparatus 500 predicts an operational state from operational data of the device that is device type A.

Specifically, the prediction apparatus 500 acquires a predicted value for an operational state of the device that is device type A by inputting operational data of the device that is device type A into the provisional prediction model (i.e., the model for the device type B) 10 to output an operational state. Moreover, the prediction apparatus 500 acquires a corrected predicted value for the operational state of the device that is device type A by inputting the predicted value for the operational state of the device that is device type A into the correction model 20 to output the corrected predicted value for the operational state (the corrected predicted value for the operational state of the device that is device type A may be acquired by inputting the predicted value for the operational state of the device that is device type A and the operational data of the device that is device type A into the correction model 20).

In this way, by generating a correction model using a small amount of operational data of the device that is device type A (e.g., a new device type), and using this correction model and the provisional prediction model for the device type B (e.g., an old device type), it is possible to predict an operational state from the operational data of the device that is device type A without generating a prediction model dedicated to the device type A.

### <Example of overall configuration>

FIG. 2 is an example of the overall configuration of the present disclosure.

As illustrated in <Example 1>, the prediction apparatus 500 may be implemented on a computer installed in, for example, the same building as that in which an air conditioning system 100 is installed. The correction model generation apparatus 400 may be implemented on a cloud server apart from the air conditioning system 100 and the prediction apparatus 500.

As illustrated in <Example 2>, the prediction apparatus 500 may be implemented as a part of the air conditioning system 100 (e.g., may be installed in an outdoor unit 200 or an indoor unit 300). The correction model generation apparatus 400 may be implemented on a cloud server apart from the air conditioning system 100 and the prediction apparatus 500.

As illustrated in <Example 3>, the correction model generation apparatus 400 and the prediction apparatus 500 may be implemented on a cloud server apart from the air conditioning system 100. The correction model generation apparatus 400 and the prediction apparatus 500 may be implemented on one apparatus.

As illustrated in <Example 4>, the correction model generation apparatus 400 and the prediction apparatus 500 may be implemented on a computer installed in, for example, the same building as that in which the air conditioning system 100 is installed. The correction model generation apparatus 400 and the prediction apparatus 500 may be implemented on one apparatus.

As illustrated in <Example 5>, the correction model generation apparatus 400 and the prediction apparatus 500 may be implemented as a part of the air conditioning system 100 (e.g., may be installed in an outdoor unit 200 or an indoor unit 300). The correction model generation apparatus 400 and the prediction apparatus 500 may be implemented on one apparatus.

The hardware configuration of the air conditioning system 100 will be described with reference to FIG. 3 to FIG. 5. The air conditioning system 100 may be any desirably selected air conditioning system such as a multi-type air conditioner such as a multi-type air conditioner for buildings, a central air-conditioning system using a chiller as a heat source, an air conditioner for shops and offices, and a room air conditioner, or may be intended for purposes other than air-cooling and warming, and may be a refrigeration/freezing system. The air conditioning system 100 may include a plurality of indoor units 300. The plurality of indoor units 300 may include indoor units having different performances, may include indoor units having the same performance, or may include indoor units in a stopped state.

### <Hardware configuration of air conditioning system (in a case of air-cooling operation)>

FIG. 3 is a diagram of the hardware configuration of the air conditioning system (in a case of an air-cooling operation) 100 according to an embodiment of the present disclosure. The air conditioning system 100 includes an outdoor unit 200 and one or a plurality of indoor units 300.

In the example of FIG. 3, an outdoor heat exchanger 201, an outdoor unit main expansion valve 205, a supercooling heat exchanger 203, an indoor heat exchanger expansion valve 302, a four-way valve 206, an indoor heat exchanger 301, and a compressor 202 are coupled through a refrigerant pipe, and constitute a main refrigerant circuit. Flow paths in the four-way valve 206 are set such that a gas discharged from the compressor 202 is supplied to the outdoor heat exchanger 201. In the example of FIG. 3, a supercooling heat exchanger expansion valve 204 is further provided on a bypass pipe that is connected from a pipe between the outdoor heat exchanger 201 and the supercooling heat exchanger 203 to a pipe at a suction side of the compressor 202. The supercooling heat exchanger 203 is a heat exchanger configured to make a refrigerant, which has passed through the supercooling heat exchanger expansion valve 204 provided on the bypass pipe connected from between the outdoor heat exchanger 201 and the supercooling heat exchanger 203 to the pipe at the suction side of the compressor 202, exchange heat with a refrigerant in the main refrigerant circuit. The bypassing example of FIG. 3 is an example.

### <<Outdoor unit>>

In the outdoor unit 200, the outdoor heat exchanger 201, the compressor 202, the supercooling heat exchanger 203, the supercooling heat exchanger expansion valve (bypass circuit) 204, and the outdoor unit main expansion valve (main refrigerant circuit) 205 are connected to piping. The outdoor unit 200 includes various sensors (e.g., temperature sensors (e.g., thermistors) (1), (3), (4), (6), and (7), and pressure sensors (2) and (5)).

### <<Indoor unit>>

In the indoor unit 300, the indoor heat exchanger 301 and the indoor heat exchanger expansion valve 302 are connected to piping. The indoor unit 300 includes various sensors (e.g., temperature sensors (e.g., thermistors) (8) and (9)).

### <Hardware configuration of air conditioning system (in a case of air-warming operation)>

FIG. 4 is a diagram of the hardware configuration of the air conditioning system (in a case of an air-warming operation) 100 according to an embodiment of the present disclosure. The air conditioning system 100 includes an outdoor unit 200 and one or a plurality of indoor units 300.

In the example FIG. 4, an outdoor heat exchanger 201, a compressor 202, a four-way valve 206, an indoor heat exchanger 301, an indoor heat exchanger expansion valve 302, a supercooling heat exchanger 203, and an outdoor unit main expansion valve 205 are coupled through refrigerant piping, and together constitute a main refrigerant circuit. Flow paths in the four-way valve 206 are set such that a gas discharged from the compressor 202 is supplied to the indoor heat exchanger 301.

### <<Outdoor unit>>

In the outdoor unit 200, the outdoor heat exchanger 201, the compressor 202, the supercooling heat exchanger 203, a supercooling heat exchanger expansion valve (bypass circuit) 204, and the outdoor unit main expansion valve (main refrigerant circuit) 205 are connected to the piping. The outdoor unit 200 includes various sensors (e.g., temperature sensors (e.g., thermistors) (1), (3), (4), (6), and (7), and pressure sensors (2) and (5)).

### <<Indoor unit>>

In the indoor unit 300, the indoor heat exchanger 301 and the indoor heat exchanger expansion valve 302 are connected to a pipe. The indoor unit 300 includes various sensors (e.g., temperature sensors (e.g., thermistors) (8) and (9)).

### <Hardware configuration of air conditioning system (in a case of simultaneous air-cooling and warming operation)>

The present disclosure is not limited to an ai-cooling operation and an air-warming operation, and can be applied to a simultaneous air-cooling and warming operation. A simultaneous air-cooling and warming operation will be described below with reference to FIG. 5.

FIG. 5 is a diagram of the hardware configuration of the air conditioning system (in a case of a simultaneous air-cooling and warming operation) 100 according to an embodiment of the present disclosure. An air conditioning system 100, in which an outdoor heat exchanger 201-1 and an outdoor heat exchanger 201-2, which have a two-parted structure, and a plurality of indoor units are coupled through three communicating pipes, can perform a simultaneous air-cooling and warming operation. FIG. 5 illustrates an operation example in which air cooling is main, and an indoor unit 300-1 is operated in an air-warming mode whereas an indoor unit 300-2 is operated in an air-cooling mode. Here, the outdoor heat exchanger 201-1 functions as a condenser whereas the outdoor heat exchanger 201-2 functions as an evaporator.

### <Hardware configurations of correction model generation apparatus, prediction apparatus, and provisional prediction model generation apparatus>

FIG. 6 is a diagram of the hardware configurations of the correction model generation apparatus 400, the prediction apparatus 500, and the provisional prediction model generation apparatus 600 according to an embodiment of the present disclosure.

The correction model generation apparatus 400, the prediction apparatus 500, and the provisional prediction model generation apparatus 600 each include a Central Processing Unit (CPU) 1, a Read Only Memory (ROM) 2, and a Random Access Memory (RAM) 3. The CPU 1, the ROM 2, and the RAM 3 form what is generally referred to as a computer.

The correction model generation apparatus 400, the prediction apparatus 500, and the provisional prediction model generation apparatus 600 can each be equipped with an auxiliary memory device 4, a display device 5, an operation device 6, and an Interface (I/F) device 7. The hardware components of the correction model generation apparatus 400, the prediction apparatus 500, and the provisional prediction model generation apparatus 600 are mutually coupled through a bus 8.

The CPU 1 is an operation device configured to execute various programs installed on the auxiliary memory device 4.

The ROM 2 is a nonvolatile memory. The ROM 2 functions as a main memory device configured to store, for example, various programs and data needed for the CPU 1 to execute the various programs installed on the auxiliary memory device 4. Specifically, the ROM 2 functions as a main memory device configured to store, for example, a boot program such as a Basic Input/Output System (BIOS) or an Extensible Firmware Interface (EFI).

The RAM 3 is a volatile memory such as a Dynamic Random Access Memory (DRAM) or a Static Random Access Memory (SRAM). The RAM 3 functions as a main memory device configured to provide a work area in which various programs installed on the auxiliary memory device 4 are deployed when executed by the CPU 1.

The auxiliary memory device 4 is an auxiliary memory device configured to store various programs and information used when the various programs are executed.

The display device 5 is a display device configured to display, for example, internal statuses of the correction model generation apparatus 400, the prediction apparatus 500, and the provisional prediction model generation apparatus 600.

The operation device 6 is an input device via which administrators of the correction model generation apparatus 400, the prediction apparatus 500, and the provisional prediction model generation apparatus 600 input various instructions into the correction model generation apparatus 400, the prediction apparatus 500, and the provisional prediction model generation apparatus 600.

The I/F device 7 is a communication device configured to connect to various sensors and networks to communicate with other terminals.

### <Functional blocks>

The functional blocks of the correction model generation apparatus 400 will be described with reference to FIG. 7, and the functional blocks of the prediction apparatus 500 will be described with reference to FIG. 8.

FIG. 7 is a functional block diagram of the correction model generation apparatus 400 according to an embodiment of the present disclosure. As illustrated in FIG. 7, the correction model generation apparatus 400 includes a training unit (correction model generation unit) 401, a predicted value acquiring unit 402, and an actually measured value acquiring unit 403. The correction model generation apparatus 400 functions as the training unit (correction model generation unit) 401, the predicted value acquiring unit 402, and the actually measured value acquiring unit 403 by executing programs. Each unit will be described below.

The predicted value acquiring unit 402 is configured to acquire operational data of the device that is device type A. The predicted value acquiring unit 402 is also configured to input the operational data of the device that is device type A into the provisional prediction model (i.e., the model for the device type B) 10 to output a predicted value for an operational state.

The actually measured value acquiring unit 403 is configured to acquire an actually measured value for an operational state of the device that is device type A (i.e., an operational state calculated from the operational data of the device that is device type A). The actually measured value acquiring unit 403 can calculate an operational state from the operational data of the device that is device type A.

The training unit (correction model generation unit (which is an example of a correction unit)) 401 is configured to generate the correction model 20. Specifically, the training unit (correction model generation unit) 401 is configured to generate the correction model 20 by performing machine learning by associating the predicted value for the operational state of the device that is device type A acquired by the predicted value acquiring unit 402 with the actually measured value for the operational state of the device that is device type A acquired by the actually measured value acquiring unit 403.

FIG. 8 is a functional block diagram of the prediction apparatus 500 according to an embodiment of the present disclosure. As illustrated in FIG. 8, the prediction apparatus 500 includes a prediction unit 501, an operational data acquiring unit 502, and an output unit 503. The prediction apparatus 500 functions as the prediction unit 501, the operational data acquiring unit 502, and the output unit 503 by executing programs. Each unit will be described below.

The operational data acquiring unit 502 is configured to acquire operational data (specifically, operational data of the device that is device type A).

The prediction unit 501 is configured to acquire a predicted value for an operational state of the device that is device type A by inputting the operational data of the device that is device type A acquired by the operational data acquiring unit 502 into the provisional prediction model (i.e., the model for the device type B) 10 to output an operational state. The prediction unit 501 is also configured to acquire a corrected predicted value for the operational state of the device that is device type A by inputting the predicted value for the operational state of the device that is device type A into the correction model 20 to output the corrected predicted value for the operational state.

The output unit 503 is configured to output the corrected predicted value for the operational state of the device that is device type A predicted by the prediction unit 501. Subsequently, the corrected predicted value for the operational state of the device that is device type A may be used in order to sense leakage of a refrigerant from the device that is device type A, sense a failure of the device that is device type A, or control the device that is device type A.

### <Examples of operational data>

Here, examples of the operational data of the device will be described.

### (Example 1)

For example, the operational data of the device may include at least one selected from the following.
- Condensation temperature
- Evaporation temperature
- Condenser outlet temperature
- Evaporator outlet temperature
- Outdoor temperature
- Rotation rate of the compressor 202
- Opening degree of the supercooling heat exchanger expansion valve 204
- Electrical current value of the compressor 202

### (Example 2)

For example, the operational data of the device may include at least one selected from the following in addition to the operational data described above (Example 1) or instead of the operational data described above (Example 1).
- Opening degree of the indoor unit expansion valve 302
- Opening degree of the outdoor unit main expansion valve 205
- Total value of rated capacities of the indoor units under operation or on standby for operation
- Number of operating indoor units
- Capabilities of the indoor units (air-cooling or air-warming)
- Blowoff temperature of the indoor units
- Indoor temperature
- Refrigerant temperature in a pipe connected to a liquid closing valve of the outdoor unit (a liquid temperature in a communicating pipe sensed by the thermistor (4) in FIG. 3 and FIG. 4)
- Refrigerant temperature in a liquid communicating pipe (a temperature measured in a communicating pipe outside the outdoor unit 200 sensed by an externally attached sensor attached outside the outdoor unit 200)
- Air flow rate of an outdoor unit's fan
- Air flow rates of indoor units' fans
- Rotation rate (step, tap) of an outdoor unit's fan
- Rotation rates (step, tap) of indoor units' fans
- Electrical current value of an outdoor unit's fan
- Electrical current values of indoor units' fans
- Amount of a refrigerant circulated
- Discharging temperature of the compressor 202
- Suction temperature of the compressor 202
- Superheating degree in discharge of the compressor 202
- Superheating degree in suction of the compressor 202
- Supercooling degree at the supercooling heat exchanger 203 outlet (in a case of including a supercooling heat exchanger circuit)
- Superheating degree at the supercooling heat exchanger 203 outlet (gas pipe side) (in a case of including a supercooling heat exchanger circuit)
- Supercooling degree at the outlet of an economizer (in a case of including an economizer circuit)
- Opening degree of an expansion valve for an economizer (in a case of including an economizer circuit)
- Pressure at the outlet at an economizer bypass side (in a case of including an economizer circuit)
- Opening degree of an expansion valve for intermediate injection (in a case of including an intermediate injection circuit)
- Intermediate injection temperature (in a case of including an intermediate injection circuit)
- Intermediate injection pressure (in a case of including an intermediate injection circuit)
- Water temperature at the inlet of the evaporator (in a case where either or both of a heat source side and a use side is/are a water cooling type)
- Water temperature at the outlet of the evaporator (in a case where either or both of a heat source side and a use side is/are a water cooling type)
- Water temperature at the inlet of the condenser (in a case where either or both of a heat source side and a use side is/are a water cooling type)
- Water temperature at the outlet of the condenser (in a case where either or both of a heat source side and a use side is/are a water cooling type)

### (Example 3)

For example, operational data for deducing a predicted value for an index value for a refrigerant amount during a normal operation may include either or both of the following in addition to the operational data described above (Example 1 and Example 2) or instead of the operational data described above (Example 1 and Example 2).
- Number of defrosting times
- Defrosting period of time

### <Examples of operational state>

Here, examples of the operational state of the device will be described.

### (Example 1 (in a case of air-cooling operation))

For example, the operational state may include at least one selected from the following.
- Condensation temperature - temperature at the outlet of the outdoor heat exchanger 201 (hereinafter, this is also referred to as a supercooling degree at the outlet of the outdoor heat exchanger. Superheating degree is also referred to as SC or subcool.)
- Superheating degree in suction of the compressor (superheating degree is also referred to as SH or superheat).
- Superheating degree in discharge of the compressor
- Value based on the supercooling degree at the outlet of the outdoor heat exchanger or the suction superheating degree of the compressor or the discharge superheating degree of the compressor

For example, the value based on the supercooling degree at the outlet of the outdoor heat exchanger is a value calculated using the supercooling degree at the outlet of the outdoor heat exchanger. For example, a value calculated using the supercooling degree at the outlet of the outdoor heat exchanger is as descried below.
- 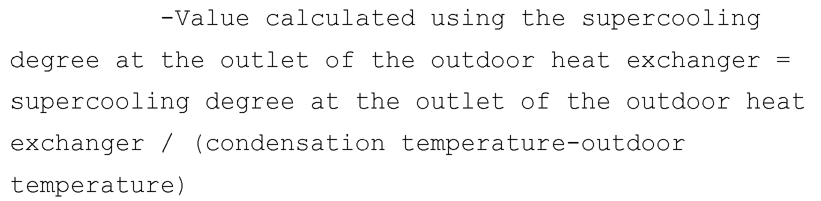 Value calculated using the supercooling degree at the outlet of the outdoor heat exchanger = supercooling degree at the outlet of the outdoor heat exchanger / (condensation temperature-outdoor temperature)

For example, the value based on the supercooling degree at the outlet of the outdoor heat exchanger is a value defined from physical properties of a refrigerant and refrigeration cycle diagrams (T-S and P-h diagrams).

### (Example 2 (in a case of air-cooling operation))

For example, the operational state may include at least one selected from the following in addition to the index value for the refrigerant amount described above (Example 1) or instead of the supercooling degree at the outlet of the outdoor heat exchanger in the index value for the refrigerant amount described above (Example 1).
- Supercooling degree at the outlet of the supercooling heat exchanger
- Value based on the supercooling degree at the outlet of the supercooling heat exchanger

### (Example 3 (in a case of air-warming operation))

In a case of an air-warming operation, the operational state may include at least one selected from the following instead of the operational states described above (Example 1 and Example 2).
- Supercooling degree at the outlet of an indoor heat exchanger
- Value based on the supercooling degree at the outlet of an indoor heat exchanger

The supercooling degree at the outlet of an indoor heat exchanger is any one selected from: at least one of the supercooling degrees of the plurality of indoor heat exchangers 301; the average of the supercooling degrees of the plurality of indoor heat exchangers 301; and the supercooling degree at the indoor junction or the outdoor junction of the plurality of indoor heat exchangers 301.

### (Example 4 (in a case of simultaneous air-cooling and warming operation))

In a case of a simultaneous air-cooling and warming operation, the operational state include the following in addition to the operational states described above (either or both of Example 1 and Example 2).
- Combination of the supercooling degree at the outlet of an indoor heat exchanger (an indoor heat exchanger 301 of an air-warming indoor unit 300-1 of FIG. 5) and the supercooling degree at the outlet of the outdoor heat exchanger (the outdoor heat exchanger (condenser) 201-1 of FIG. 5)

### <Examples of device>

Examples of the device will be described below.

For example, the device used for generating the correction model 20 is the device that is the same as and of the same device type as that of the device for which the prediction apparatus 500 performs prediction.

For example, the device used for generating the correction model 20 is one or a plurality of devices different from and of the same device type as that of the device for which the prediction apparatus 500 performs prediction.

For example, the device used for generating the correction model 20 include the device that is the same as and of the same device type as that of, and one or a plurality of devices different from and of the same device type as that of, the device for which the prediction apparatus 500 performs prediction.

For example, the device type of the device is a new device type of a device, which is of a device type different from that of the device. That is, the device type A is a new device type of the device type B.

For example, the device has a function similar to that of a device, which is of a device type different from that of the device. That is, the device type A and the device type B have a similar function.

### <Method>

A provisional prediction model generation process will be described below with reference to FIG. 9. A correction model generation process will be described below with reference to FIG. 10. A prediction process will be described below with reference to FIG. 11.

FIG. 9 is a flowchart for the provisional prediction model generation process according to an embodiment of the present disclosure.

In the step 11 (S11), the provisional prediction model generation apparatus 600 acquires training data (operational data and an operational state of a device that is device type B). When the device type B is an old device type of the device type A, and a prediction model for the device type B has already been generated, this process may be omitted by using this prediction model as a provisional model.

In the step 12 (S12), the provisional prediction model generation apparatus 600 generates a provisional prediction model (i.e., a model for the device type B) 10 by performing machine learning by using the training data acquired in S11 (specifically, by performing machine learning by associating the operational data and the operational state of the device that is device type B with each other).

FIG. 10 is a flowchart for the correction model generation process according to an embodiment of the present disclosure.

In the step 21 (S21), the predicted value acquiring unit 402 acquires operational data of the device that is device type A.

In the step 22 (S22), the predicted value acquiring unit 402 inputs the operational data of the device that is device type A acquired in S21 into the provisional prediction model (i.e., the model for the device type B) 10, to output a predicted value for an operational state.

In the step 23 (S23), the actually measured value acquiring unit 403 acquires an actually measured value for the operational state of the device that is device type A (i.e., an operational state calculated from the operational data of the device that is device type A).

S23 may be performed first and S21 and S22 may be performed after S23, or S21 and S22 may be performed simultaneously with S23.

In the step 24 (S24), the training unit (correction model generation unit) 401 generates a correction model 20. Specifically, the training unit (correction model generation unit) 401 generates the correction model 20 by performing machine learning by associating the predicted value for the operational state of the device that is device type A acquired in S22 with the actually measured value for the operational state of the device that is device type A acquired in S23.

FIG. 11 is a flowchart for the prediction process according to an embodiment of the present disclosure.

In the step 31 (S31), the operational data acquiring unit 502 acquires operational data (specifically, operational data of the device that is device type A).

In the step 32 (S32), the prediction unit 501 acquires a predicted value for an operational state of the device that is device type A by inputting the operational data of the device that is device type A acquired in S31 into the provisional prediction model (i.e., the model for the device type B) 10 to output an operational state.

In the step 33 (S33), the prediction unit 501 acquires a corrected predicted value for the operational state of the device that is device type A by inputting the predicted value for the operational state of the device that is device type A acquired in S32 into the correction model 20 to output the corrected predicted value for the operational state.

In the step 34 (S34), the output unit 503 outputs the corrected predicted value for the operational state of the device that is device type A of S33. Subsequently, the corrected predicted value for the operational state of the device that is device type A may be used to sense leakage of a refrigerant from the device that is device type A, to sense a failure of the device that is device type A, or to control the device that is device type A.

### <<Updating from "provisional prediction model + correction model" to "prediction model">>

FIG. 12 is a diagram illustrating updating of the provisional prediction model and the correction model to a prediction model according to an embodiment of the present disclosure. The prediction apparatus 500 may include an updating unit 504 configured to update the provisional prediction model 10 and the correction model 20 to a prediction model for the device that is device type A. In this way, after operational data of the device that is device type A have been sufficiently accumulated, the prediction apparatus 500 can generate a prediction model for the device that is device type A as a replacement.

### <<Updating of correction model>>

FIG. 13 is a diagram illustrating updating of the correction model according to an embodiment of the present disclosure. The prediction apparatus 500 may include an updating unit 504 configured to update the correction model. In this way, the prediction apparatus 500 can use the newest correction model.

### <Correction model generation example>

The prediction apparatus 500 can predict a difference between a predicted value for an operational state of the device and an actually measured value for the operational state of the device. The details will be described with reference to FIG. 14.

FIG. 14 is a diagram illustrating another embodiment for generation of a correction model according to an embodiment of the present disclosure. <Generation of provisional prediction model>, <Generation of correction model>, and <Operation using provisional prediction model and correction model in combination> will be described below in this order.

### <Generation of provisional prediction model>

First, the provisional prediction model generation apparatus 600 generates a provisional prediction model 10. Specifically, the provisional prediction model generation apparatus 600 generates a provisional prediction model (i.e., a model for a device B) 10 by performing machine learning by using training data (specifically, by performing machine learning by associating operational data and an operational state of the device B with each other).

### <Generation of correction model>

Next, the correction model generation apparatus (an example of the correction apparatus) 400 generates a correction model 20. The correction model 20 is a model configured to predict a difference between a predicted value for an operational state obtained by the provisional prediction model 10 and an actually measured value for the operational state.

Specifically, the correction model generation apparatus 400 acquires a predicted value for an operational state of the device A by inputting operational data of the device A into the provisional prediction model (i.e., the model for the device B) 10. The correction model generation apparatus 400 acquires an actually measured value for an operational state of the device A (specifically, an operational state calculated from the operational data of the device A). Moreover, the correction model generation apparatus 400 acquires operational data of the device A. Then, the correction model generation apparatus 400 generates a correction model 20 by performing machine learning by associating the predicted value for the operational state of the device A, the actually measured value for the operational state of the device A, and the operational data of the device A with one another.

### <Operation using provisional prediction model and correction model in combination>

Subsequently, the device A starts to be operated. The prediction apparatus 500 predicts an operational state from operational data of the device A.

Specifically, the prediction apparatus 500 acquires a predicted value for an operational state of the device A by inputting operational data of the device A into the provisional prediction model (i.e., the model for the device B) 10. Moreover, the prediction apparatus 500 acquires a predicted value for a difference between the predicted value and an actually measured value for the operational state of the device A by inputting the operational data of the device A into the correction model 20. Then, the prediction apparatus 500 acquires a corrected predicted value for the operational state based on the predicted value for the operational state of the device A, and the predicted value for the difference between the predicted value and the actually measured value for the operational state of the device A.

Embodiment 2 and Embodiment 3 will be described below. Description of any contents that are the same as those in Embodiment 1 will be omitted.

### [Embodiment 2]

A correction apparatus 410 can correct a threshold for device abnormality determination by using a predicted value for an operational state of a device predicted using a provisional prediction model. The details will be described with reference to FIG. 15.

FIG. 15 is a diagram illustrating correction of an abnormality determination threshold according to an embodiment of the present disclosure. <Generation of provisional prediction model and calculation of threshold>, <Correction of abnormality determination threshold>, and <Operation using provisional prediction model and corrected threshold in combination> will be described below in this order.

### <Generation of provisional prediction model and calculation of threshold>

First, the provisional prediction model generation apparatus 600 generates a provisional prediction model 10. Specifically, the provisional prediction model generation apparatus 600 generates a provisional prediction model (i.e., a model for a device B) 10 by performing machine learning by using training data (specifically, by performing machine learning by associating operational data and an operational state of the device B with each other).

Moreover, a threshold for the device B (referred to as ε_B) is calculated from: a predicted value for an operational state of the device B (specifically, the operational state is output by inputting operational data of the device B into the provisional prediction model 10); and an actually measured value for the operational state of the device B (specifically, the actually measured value is an operational state calculated from the operational data of the device B). For example, where an average and a standard deviation of a Δ operational state quantity of the device B (= an actually measured value for an operational state quantity of the device B - a predicted value for the operational state quantity of the device B predicted by the provisional prediction model 10) are denoted by µ_b and σ_b, respectively, the threshold (ε_B) for the device B can be defined as "µ_b-3×σ_b".

### <Correction of abnormality determination threshold>

Next, the correction apparatus 410 corrects the threshold. First, a predicted value for an operational state of the device A is acquired by inputting operational data of the device A into the provisional prediction model (i.e., the model for the device B) 10. Where an average and a standard deviation of a Δ operational state quantity of the device A (= an actually measured value for an operational state quantity of the device A - a predicted value for the operational state quantity of the device A predicted by the provisional prediction model 10) are denoted by µ_a and σ_a, respectively, a threshold (ε_A) for the device A can be defined as "µ_a-3×σ_a". In this way, the threshold is corrected from ε_B to ε_A.

### <Operation using provisional prediction model and corrected threshold in combination>

Subsequently, the device A starts to be operated. An abnormality determination apparatus 510 determines abnormality from operational data of the device A. Specifically, the abnormality determination apparatus 510 determines an abnormality (e.g., leakage of a refrigerant from the device A or a failure of the device A) by comparing the Δ operational state quantity of the device A (= an actually measured value for an operational state quantity of the device A - a predicted value for the operational state quantity of the device A predicted by the provisional prediction model 10) with the threshold (ε_A) for the device A.

### [Embodiment 3]

The correction apparatus can correct a control gain involved in controlling a device by using a predicted value for an operational state of the device predicted using a provisional prediction model. The details will be described with reference to FIG. 16.

FIG. 16 is a diagram illustrating correction of a control gain involved in device control according to an embodiment of the present disclosure. <Generation of provisional prediction model and calculation of control gain>, <Addition of correction control gain>, and <Operation using provisional prediction model and correction control gain in combination> will be described below in this order.

### <Generation of provisional prediction model and calculation of control gain>

First, the provisional prediction model generation apparatus 600 generates a provisional prediction model 10. Specifically, the provisional prediction model generation apparatus 600 generates a provisional prediction model (i.e., a model for a device B) 10 by performing machine learning by using training data (specifically, by performing machine learning by associating operational data and an operational state of the device B with each other).

Moreover, a control gain of the device B (an output from the device B (an actually measured value for an operational state) / an input into the device B (an actually measured value for operational data)) is calculated. The control gain of the device B is referred to as "K_B".

### <Addition of correction control gain>

Next, the correction apparatus 410 calculates a correction control gain to be added. A correction control gain (a correction coefficient for an output from the provisional prediction model (i.e., the model for the device B) 10) is referred to as "K_c". The correction control gain (K_c) is "an output (an actually measured value for an operational state) from the device A / an output (a predicted value for the operational state) from the provisional prediction model (i.e., the model for the device B) 10" with respect to the same input. Hence, a predicted value for the output from the device A can be calculated according to K_c × the output from the provisional prediction model **(i.e.,** the model for the device B) 10.

### <Operation using provisional prediction model and correction control gain in combination (example of application to Internal Model Control (IMC)>

Subsequently, the device A starts to be operated. A device control apparatus 520 controls the device A by using the provisional prediction model (i.e., the model for the device B) 10 and the correction control gain (K_c), which is the correction coefficient for an output from the provisional prediction model (i.e., the model for the device B) 10. Specifically, the device control apparatus 520 performs control such that an output from the device A (an actually measured value for an operational state) becomes closer to a target value. In the present embodiment, a gain for correcting an output from the provisional prediction model (i.e., the model for the device B) 10 is added. However, a gain for correcting the control gain K_B of the device B may be added.

### [Reference Signs List]

1: CPU
2: ROM
3: RAM
4: auxiliary memory device
5: display device
6: operation device
7: I/F device
8: bus
10: provisional prediction model
20: correction model
100: air conditioning system
200: outdoor unit
201: outdoor heat exchanger
201-1: outdoor heat exchanger (condenser)
201-2: outdoor heat exchanger (evaporator)
202: compressor
203: supercooling heat exchanger
204: supercooling heat exchanger expansion valve
205: outdoor unit main expansion valve
206: four-way valve
300: indoor unit
300-1: air-warming indoor unit
300-2: air-cooling indoor unit
301: indoor heat exchanger
302: indoor heat exchanger expansion valve
400: correction model generation apparatus
401: training unit (correction model generation unit)
402: predicted value acquiring unit
403: actually measured value acquiring unit
410: correction apparatus
500: prediction apparatus
501: prediction unit
502: operational data acquiring unit
503: output unit
504: updating unit
510: abnormality determination apparatus
520: device control apparatus
600: provisional prediction model generation apparatus

## Claims

1. An apparatus (500) configured to perform correction regarding a predicted value for an operational state predicted from operational data of a first device, the apparatus comprising:
a provisional prediction model (10) that is trained by machine learning based on training data including operational data and an operational state of a second device different from the first device;
a correction unit (501) configured to perform correction regarding the predicted value for the operational state of the first device, the predicted value being predicted using the provisional prediction model, wherein the correction unit (501) is configured to generate a correction model (20) configured to correct the predicted value for the operational state of the first device, the predicted value being predicted using the provisional prediction model.

2. The apparatus (500) according to claim 1, further comprising:
an acquiring unit (502) configured to acquire the predicted value for the operational state of the first device by inputting the operational data of the first device into the provisional prediction model to output the operational state of the first device; and
an acquiring unit configured to acquire an actually measured value for the operational state of the first device,
wherein the correction unit (501) is configured to perform machine learning by associating the predicted value for the operational state of the first device with the actually measured value for the operational state of the first device.

3. The apparatus (500) according to claim 1, further comprising:
an operational data acquiring unit (502) configured to acquire operational data of the first device; and
a prediction unit (501) configured to predict the predicted value for the operational state of the first device from the operational data of the first device using the provisional prediction model, and predict a corrected predicted value for the operational state of the first device from the predicted value for the operational state of the first device using the correction model.

4. The apparatus (500) according to claim 3,
wherein the prediction unit (501) is configured to acquire the predicted value for the operational state of the first device by inputting the operational data of the first device into the provisional prediction model to output the operational state of the first device, and acquire the corrected predicted value for the operational state of the first device by inputting the predicted value for the operational state of the first device into the correction model to output the corrected predicted value for the operational state of the first device.

5. The apparatus (500) according to claim 4,
wherein the prediction unit (501) is further configured to input the operational data of the device into the correction model together with the predicted value for the operational state of the first device.

6. The apparatus (500) according to any one of claims 3 to 5,
wherein the second device used for generating the correction model is a device that is same as and of a same device type as that of the first device for which the prediction unit performs prediction.

7. The apparatus (500) according to any one of claims 3 to 5,
wherein the second device used for generating the correction model is one or a plurality of devices different from and of a same device type as that of the first device for which the prediction unit performs prediction.

8. The apparatus (500) according to any one of claims 3 to 5,
wherein the second device used for generating the correction model includes a device that is same as and of a same device type as that of, and one or a plurality of devices different from and of a same device type as that of, the first device for which the prediction unit performs prediction.

9. The apparatus (500) according to any one of claims 3 to 8, further comprising:
an updating unit configured to update the provisional prediction model and the correction model to a prediction model for the first device.

10. The apparatus (500) according to any one of claims 3 to 8, further comprising:
an updating unit configured to update the correction model.

11. The apparatus (500) according to any one of claims 1 to 10,
wherein a device type of the first device is a new device type of the device different from the second device.

12. The apparatus (500) according to any one of claims 1 to 10,
wherein the first device has a function similar to that of the second device.

13. The apparatus (500) according to any one of claims 1 to 12,
wherein the first device is an air conditioner.

14. The apparatus (500) according to any one of claims 1 to 13,
wherein the operational state is used for at least any one selected from leakage of a refrigerant from the first device, a failure of the first device, and control on the first device.

15. The apparatus (500) according to claim 3,
wherein the prediction unit is configured to predict a difference between the predicted value for the operational state of the first device and an actually measured value for the operational state of the first device.

16. The apparatus (500) according to claim 1,
wherein the correction unit is configured to correct an abnormality determination threshold by using the predicted value for the operational state of the first device, the predicted value being predicted using the provisional prediction model.

17. The apparatus (500) according to claim 1,
wherein the correction unit is configured to correct a control gain, the control gain being involved in a control using the predicted value for the operational state of the first device, the predicted value being predicted using the provisional prediction model.

18. A method of performing correction regarding a predicted value for an operational state predicted from operational data of a first device, the method comprising:
a step of performing correction regarding a predicted value for the operational state of the first device, the predicted value being predicted using a provisional prediction model that is trained by machine learning based on training data including operational data and an operational state of a second device different from the first device;
a step of generating a correction model (20) configured to correct the predicted value for the operational state of the first device, the predicted value being predicted using the provisional prediction model.

19. A program causing a computer, which is configured to perform correction regarding a predicted value for an operational state predicted from operational data of a first device, to function as:
a correction unit (501) configured to perform correction regarding a predicted value for the operational state of the first device, the predicted value being predicted using a provisional prediction model that is trained by machine learning based on training data including operational data and an operational state of a second device different from the first device, wherein the correction unit (501) is configured to generate a correction model (20) configured to correct the predicted value for the operational state of the first device, the predicted value being predicted using the provisional prediction model.

20. The method according to claim 18, further comprising:
a step of acquiring operational data of the first device; wherein
the step of performing correction uses the provisional prediction model; and a correction model configured to correct the predicted value for the operational state of the first device, the predicted value being predicted using the provisional prediction model.

21. The program according to claim 19, further causing the computer to function as:
an operational data acquiring unit configured to acquire operational data of the first device; wherein
the correction unit is configured to perform the correction , using: the provisional prediction model; and a correction model configured to correct the predicted value for the operational state of the first device, the predicted value being predicted using the provisional prediction model.

22. A correction model configured to correct a predicted value for an operational state predicted from operational data of a first device, the correction model causing a computer to function to:
correct a predicted value for the operational state of the first device, the predicted value being predicted using a provisional prediction model that is trained by machine learning based on training data including operational data and an operational state of a second device different from the first device,
generate a correction model (20) configured to correct the predicted value for the operational state of the first device, the predicted value being predicted using the provisional prediction model.

## Patentansprüche

1. Einrichtung (500), die konfiguriert ist, eine Korrektur hinsichtlich eines vorhergesagten Werts für einen Betriebszustand auszuführen, der aus Betriebsdaten einer ersten Vorrichtung vorhergesagt wird, die Einrichtung umfassend:
ein vorläufiges Vorhersagemodell (10), das durch maschinelles Lernen basierend auf Trainingsdaten trainiert wird, die Betriebsdaten und einen Betriebszustand einer zweiten Vorrichtung einschließen, die sich von der ersten Vorrichtung unterscheidet;
eine Korrektureinheit (501), die konfiguriert ist, eine Korrektur hinsichtlich des vorhergesagten Werts für den Betriebszustand der ersten Vorrichtung auszuführen, wobei der vorhergesagte Wert unter Verwendung des vorläufigen Vorhersagemodells vorhergesagt wird, wobei die Korrektureinheit (501) konfiguriert ist, ein Korrekturmodell (20) zu erzeugen, das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

2. Einrichtung (500) nach Anspruch 1, weiter umfassend:
eine Erfassungseinheit (502), die konfiguriert ist, den vorhergesagten Wert für den Betriebszustand der ersten Vorrichtung zu erfassen, indem die Betriebsdaten der ersten Vorrichtung in das vorläufige Vorhersagemodell eingegeben werden, um den Betriebszustand der ersten Vorrichtung auszugeben; und
eine Erfassungseinheit, die konfiguriert ist, einen tatsächlich gemessenen Wert für den Betriebszustand der ersten Vorrichtung zu erfassen,
wobei die Korrektureinheit (501) konfiguriert ist, maschinelles Lernen durchzuführen, indem der vorhergesagte Wert für den Betriebszustand der ersten Vorrichtung mit dem tatsächlich gemessenen Wert für den Betriebszustand der ersten Vorrichtung assoziiert wird.

3. Einrichtung (500) nach Anspruch 1, weiter umfassend:
eine Betriebsdatenerfassungseinheit (502), die konfiguriert ist, Betriebsdaten der ersten Vorrichtung zu erfassen; und
eine Vorhersageeinheit (501), die konfiguriert ist, den vorhergesagten Wert für den Betriebszustand der ersten Vorrichtung aus den Betriebsdaten der ersten Vorrichtung unter Verwendung des vorläufigen Vorhersagemodells vorherzusagen und einen korrigierten vorhergesagten Wert für den Betriebszustand der ersten Vorrichtung aus dem vorhergesagten Wert für den Betriebszustand der ersten Vorrichtung unter Verwendung des Korrekturmodells vorherzusagen.

4. Einrichtung (500) nach Anspruch 3,
wobei die Vorhersageeinheit (501) konfiguriert ist, den vorhergesagten Wert für den Betriebszustand der ersten Vorrichtung zu erfassen, indem die Betriebsdaten der ersten Vorrichtung in das vorläufige Vorhersagemodell eingegeben werden, um den Betriebszustand der ersten Vorrichtung auszugeben, und den korrigierten vorhergesagten Wert für den Betriebszustand der ersten Vorrichtung zu erfassen, indem der vorhergesagte Wert für den Betriebszustand der ersten Vorrichtung in das Korrekturmodell eingegeben wird, um den korrigierten vorhergesagten Wert für den Betriebszustand der ersten Vorrichtung auszugeben.

5. Einrichtung (500) nach Anspruch 4,
wobei die Vorhersageeinheit (501) weiter konfiguriert ist, die Betriebsdaten der Vorrichtung zusammen mit dem vorhergesagten Wert für den Betriebszustand der ersten Vorrichtung in das Korrekturmodell einzugeben.

6. Einrichtung (500) nach einem der Ansprüche 3 bis 5,
wobei die zur Erzeugung des Korrekturmodells verwendete zweite Vorrichtung eine Vorrichtung ist, die dieselbe ist wie und desselben Vorrichtungstyps ist wie die erste Vorrichtung, für die die Vorhersageeinheit eine Vorhersage durchführt.

7. Einrichtung (500) nach einem der Ansprüche 3 bis 5,
wobei die zur Erzeugung des Korrekturmodells verwendete zweite Vorrichtung eine oder eine Vielzahl von Vorrichtungen ist, die sich von der ersten Vorrichtung unterscheidet und desselben Vorrichtungstyps ist wie die erste Vorrichtung, für die die Vorhersageeinheit eine Vorhersage durchführt.

8. Einrichtung (500) nach einem der Ansprüche 3 bis 5,
wobei die zur Erzeugung des Korrekturmodells verwendete zweite Vorrichtung Folgendes einschließt: eine Vorrichtung, die dieselbe ist wie die erste Vorrichtung und desselben Vorrichtungstyps ist wie derjenige der ersten Vorrichtung, und eine oder eine Vielzahl von Vorrichtungen, die sich von der ersten Vorrichtung unterscheidet und desselben Vorrichtungstyps ist wie derjenige der ersten Vorrichtung, für die die Vorhersageeinheit eine Vorhersage durchführt.

9. Einrichtung (500) nach einem der Ansprüche 3 bis 8, weiter umfassend:
eine Aktualisierungseinheit, die konfiguriert ist, das vorläufige Vorhersagemodell und das Korrekturmodell zu einem Vorhersagemodell für die erste Vorrichtung zu aktualisieren.

10. Einrichtung (500) nach einem der Ansprüche 3 bis 8, weiter umfassend:
eine Aktualisierungseinheit, die konfiguriert ist, das Korrekturmodell zu aktualisieren.

11. Einrichtung (500) nach einem der Ansprüche 1 bis 10,
wobei ein Vorrichtungstyp der ersten Vorrichtung ein neuer Vorrichtungstyp der Vorrichtung ist, die sich von der zweiten Vorrichtung unterscheidet.

12. Einrichtung (500) nach einem der Ansprüche 1 bis 10,
wobei die erste Vorrichtung eine Funktion aufweist, die derjenigen der zweiten Vorrichtung ähnlich ist.

13. Einrichtung (500) nach einem der Ansprüche 1 bis 12,
wobei die erste Vorrichtung eine Klimaanlage ist.

14. Einrichtung (500) nach einem der Ansprüche 1 bis 13,
wobei der Betriebszustand für zumindest eines ausgewählt aus einer Leckage eines Kältemittels aus der ersten Vorrichtung, einem Ausfall der ersten Vorrichtung und einer Regelung an der ersten Vorrichtung verwendet wird.

15. Einrichtung (500) nach Anspruch 3,
wobei die Vorhersageeinheit konfiguriert ist, eine Differenz zwischen dem vorhergesagten Wert für den Betriebszustand der ersten Vorrichtung und einem tatsächlich gemessenen Wert für den Betriebszustand der ersten Vorrichtung vorherzusagen.

16. Einrichtung (500) nach Anspruch 1,
wobei die Korrektureinheit konfiguriert ist, einen Schwellwert zur Anomaliebestimmung durch Verwendung des vorhergesagten Werts für den Betriebszustand der ersten Vorrichtung zu korrigieren, wobei der vorhergesagte Wert unter Verwendung des vorläufigen Vorhersagemodells vorhergesagt wird.

17. Einrichtung (500) nach Anspruch 1,
wobei die Korrektureinheit konfiguriert ist, eine Regelverstärkung zu korrigieren, wobei die Regelverstärkung in eine Regelung unter Verwendung des vorhergesagten Werts für den Betriebszustand der ersten Vorrichtung einbezogen ist, wobei der vorhergesagte Wert unter Verwendung des vorläufigen Vorhersagemodells vorhergesagt wird.

18. Verfahren zum Ausführen einer Korrektur hinsichtlich eines vorhergesagten Werts für einen Betriebszustand, der aus Betriebsdaten einer ersten Vorrichtung vorhergesagt wird, das Verfahren umfassend:
einen Schritt des Ausführens einer Korrektur hinsichtlich eines vorhergesagten Werts für den Betriebszustand der ersten Vorrichtung, wobei der vorhergesagte Wert unter Verwendung eines vorläufigen Vorhersagemodells vorhergesagt wird, das durch maschinelles Lernen basierend auf Trainingsdaten trainiert wird, die Betriebsdaten und einen Betriebszustand einer zweiten Vorrichtung einschließen, die sich von der ersten Vorrichtung unterscheidet;
einen Schritt des Erzeugens eines Korrekturmodells (20), das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

19. Programm, das einen Computer, der konfiguriert ist, eine Korrektur hinsichtlich eines vorhergesagten Werts für einen Betriebszustand, der aus Betriebsdaten einer ersten Vorrichtung vorhergesagt wird, auszuführen, veranlasst, zu fungieren als:
eine Korrektureinheit (501), die konfiguriert ist, eine Korrektur hinsichtlich eines vorhergesagten Werts für den Betriebszustand der ersten Vorrichtung auszuführen, wobei der vorhergesagte Wert unter Verwendung eines vorläufigen Vorhersagemodells vorhergesagt wird, das durch maschinelles Lernen basierend auf Trainingsdaten trainiert wird, die Betriebsdaten und einen Betriebszustand einer zweiten Vorrichtung einschließen, die sich von der ersten Vorrichtung unterscheidet, wobei die Korrektureinheit (501) konfiguriert ist, ein Korrekturmodell (20) zu erzeugen, das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

20. Verfahren nach Anspruch 18, weiter umfassend:
einen Schritt des Erfassens von Betriebsdaten der ersten Vorrichtung; wobei
der Schritt des Ausführens der Korrektur das vorläufige Vorhersagemodell und ein Korrekturmodell verwendet, das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

21. Programm nach Anspruch 19, das weiter den Computer veranlasst, als Folgendes zu fungieren:
eine Betriebsdatenerfassungseinheit, die konfiguriert ist, Betriebsdaten der ersten Vorrichtung zu erfassen; wobei
die Korrektureinheit konfiguriert ist, die Korrektur auszuführen, unter Verwendung von: dem vorläufigen Vorhersagemodell; und einem Korrekturmodell, das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

22. Korrekturmodell, das konfiguriert ist, einen vorhergesagten Wert für einen Betriebszustand, der aus Betriebsdaten einer ersten Vorrichtung vorhergesagt wird, zu korrigieren, wobei das Korrekturmodell einen Computer veranlasst, zu fungieren, um:
einen vorhergesagten Wert für den Betriebszustand der ersten Vorrichtung zu korrigieren, wobei der vorhergesagte Wert unter Verwendung eines vorläufigen Vorhersagemodells vorhergesagt wird, das durch maschinelles Lernen basierend auf Trainingsdaten trainiert wird, die Betriebsdaten und einen Betriebszustand einer zweiten Vorrichtung einschließen, die sich von der ersten Vorrichtung unterscheidet,
ein Korrekturmodell (20) zu erzeugen, das konfiguriert ist, den vorhergesagten Wert für den Betriebszustand der ersten Vorrichtung zu korrigieren, wobei der vorhergesagte Wert unter Verwendung des vorläufigen Vorhersagemodells vorhergesagt wird.

## Revendications

1. Appareil (500) configuré pour effectuer une correction concernant une valeur prédite pour un état de fonctionnement prédit à partir de données de fonctionnement d'un premier dispositif, l'appareil comprenant :
un modèle de prédiction provisoire (10) qui est entraîné par apprentissage automatique sur la base de données d'apprentissage incluant des données de fonctionnement et un état de fonctionnement d'un deuxième dispositif différent du premier dispositif ;
une unité de correction (501) configurée pour effectuer une correction concernant la valeur prédite pour l'état de fonctionnement du premier dispositif, la valeur prédite étant prédite en utilisant le modèle de prédiction provisoire, dans lequel l'unité de correction (501) est configurée pour générer un modèle de correction (20) configuré pour corriger la valeur prédite pour l'état de fonctionnement du premier dispositif, la valeur prédite étant prédite en utilisant le modèle de prédiction provisoire.

2. Appareil (500) selon la revendication 1, comprenant en outre :
une unité d'acquisition (502) configurée pour acquérir la valeur prédite pour l'état de fonctionnement du premier dispositif en introduisant les données de fonctionnement du premier dispositif dans le modèle de prédiction provisoire pour produire en sortie l'état de fonctionnement du premier dispositif ; et
une unité d'acquisition configurée pour acquérir une valeur réellement mesurée pour l'état de fonctionnement du premier dispositif,
dans lequel l'unité de correction (501) est configurée pour effectuer un apprentissage automatique en associant la valeur prédite pour l'état de fonctionnement du premier dispositif avec la valeur réellement mesurée pour l'état de fonctionnement du premier dispositif.

3. Appareil (500) selon la revendication 1, comprenant en outre :
une unité d'acquisition (502) de données de fonctionnement configurée pour acquérir des données de fonctionnement du premier dispositif ;
et
une unité de prédiction (501) configurée pour prédire la valeur prédite pour l'état de fonctionnement du premier dispositif à partir des données de fonctionnement du premier dispositif en utilisant le modèle de prédiction provisoire, et prédire une valeur prédite corrigée pour l'état de fonctionnement du premier dispositif à partir de la valeur prédite pour l'état de fonctionnement du premier dispositif en utilisant le modèle de correction.

4. Appareil (500) selon la revendication 3,
dans lequel l'unité de prédiction (501) est configurée pour acquérir la valeur prédite pour l'état de fonctionnement du premier dispositif en introduisant les données de fonctionnement du premier dispositif dans le modèle de prédiction provisoire pour produire en sortie l'état de fonctionnement du premier dispositif, et acquérir la valeur prédite corrigée pour l'état de fonctionnement du premier dispositif en introduisant la valeur prédite pour l'état de fonctionnement du premier dispositif dans le modèle de correction pour produire en sortie la valeur prédite corrigée pour l'état de fonctionnement du premier dispositif.

5. Appareil (500) selon la revendication 4,
dans lequel l'unité de prédiction (501) est en outre configurée pour introduire les données de fonctionnement du dispositif dans le modèle de correction conjointement avec la valeur prédite pour l'état de fonctionnement du premier dispositif.

6. Appareil (500) selon l'une quelconque des revendications 3 à 5,
dans lequel le deuxième dispositif utilisé pour générer le modèle de correction est un dispositif qui est identique à et d'un même type de dispositif que celui du premier dispositif pour lequel l'unité de prédiction effectue une prédiction.

7. Appareil (500) selon l'une quelconque des revendications 3 à 5,
dans lequel le deuxième dispositif utilisé pour générer le modèle de correction est un dispositif ou une pluralité de dispositifs différents de et d'un même type de dispositif que celui du premier dispositif pour lequel l'unité de prédiction effectue une prédiction.

8. Appareil (500) selon l'une quelconque des revendications 3 à 5,
dans lequel le deuxième dispositif utilisé pour générer le modèle de correction inclut un dispositif qui est identique à et d'un même type de dispositif que celui du, et un ou une pluralité de dispositifs différents de et d'un même type de dispositif que celui du premier dispositif pour lequel l'unité de prédiction effectue une prédiction.

9. Appareil (500) selon l'une quelconque des revendications 3 à 8, comprenant en outre :
une unité de mise à jour configurée pour mettre à jour le modèle de prédiction provisoire et le modèle de correction en un modèle de prédiction pour le premier dispositif.

10. Appareil (500) selon l'une quelconque des revendications 3 à 8, comprenant en outre :
une unité de mise à jour configurée pour mettre à jour le modèle de correction.

11. Appareil (500) selon l'une quelconque des revendications 1 à 10,
dans lequel un type de dispositif du premier dispositif est un nouveau type de dispositif du dispositif différent du deuxième dispositif.

12. Appareil (500) selon l'une quelconque des revendications 1 à 10,
dans lequel le premier dispositif présente une fonction similaire à celle du deuxième dispositif.

13. Appareil (500) selon l'une quelconque des revendications 1 à 12,
dans lequel le premier dispositif est un climatiseur.

14. Appareil (500) selon l'une quelconque des revendications 1 à 13,
dans lequel l'état de fonctionnement est utilisé pour au moins une quelconque sélectionnée parmi une fuite d'un fluide frigorigène d'un premier dispositif, une défaillance du premier dispositif et une commande sur le premier dispositif.

15. Appareil (500) selon la revendication 3,
dans lequel l'unité de prédiction est configurée pour prédire une différence entre la valeur prédite pour l'état de fonctionnement du premier dispositif et une valeur réellement mesurée pour l'état de fonctionnement du premier dispositif.

16. Appareil (500) selon la revendication 1,
dans lequel l'unité de correction est configurée pour corriger un seuil de détermination d'anomalie en utilisant la valeur prédite pour l'état de fonctionnement du premier dispositif, la valeur prédite étant prédite en utilisant le modèle de prédiction provisoire.

17. Appareil (500) selon la revendication 1,
dans lequel l'unité de correction est configurée pour corriger un gain de commande, le gain de commande étant impliqué dans une commande utilisant la valeur prédite pour l'état de fonctionnement du premier dispositif, la valeur prédite étant prédite en utilisant le modèle de prédiction provisoire.

18. Procédé d'exécution d'une correction concernant une valeur prédite pour un état de fonctionnement prédit à partir de données de fonctionnement d'un premier dispositif, le procédé comprenant :
une étape d'exécution d'une correction concernant une valeur prédite pour l'état de fonctionnement du premier dispositif, la valeur prédite étant prédite en utilisant un modèle de prédiction provisoire qui est entraîné par apprentissage automatique sur la base de données d'apprentissage incluant des données de fonctionnement et un état de fonctionnement d'un deuxième dispositif différent du premier dispositif ;
une étape de génération d'un modèle de correction (20) configuré pour corriger la valeur prédite pour l'état de fonctionnement du premier dispositif, la valeur prédite étant prédite en utilisant le modèle de prédiction provisoire.

19. Programme amenant un ordinateur, qui est configuré pour effectuer une correction concernant une valeur prédite pour un état de fonctionnement prédit à partir de données de fonctionnement d'un premier dispositif, à fonctionner en tant que :
une unité de correction (501) configurée pour effectuer une correction concernant une valeur prédite pour l'état de fonctionnement du premier dispositif, la valeur prédite étant prédite en utilisant un modèle de prédiction provisoire qui est entraîné par apprentissage automatique sur la base de données d'apprentissage incluant des données de fonctionnement et un état de fonctionnement d'un deuxième dispositif différent du premier dispositif, dans lequel l'unité de correction (501) est configurée pour générer un modèle de correction (20) configuré pour corriger la valeur prédite pour l'état de fonctionnement du premier dispositif, la valeur prédite étant prédite en utilisant le modèle de prédiction provisoire.

20. Procédé selon la revendication 18, comprenant en outre :
une étape d'acquisition de données de fonctionnement du premier dispositif ; dans lequel
l'étape d'exécution de la correction utilise le modèle de prédiction provisoire ; et un modèle de correction configuré pour corriger la valeur prédite pour l'état de fonctionnement du premier dispositif, la valeur prédite étant prédite en utilisant le modèle de prédiction provisoire.

21. Programme selon la revendication 19, amenant en outre l'ordinateur à fonctionner en tant que :
une unité d'acquisition de données de fonctionnement configurée pour acquérir des données de fonctionnement du premier dispositif ; dans lequel
l'unité de correction est configurée pour effectuer la correction, en utilisant : le modèle de prédiction provisoire ; et un modèle de correction configuré pour corriger la valeur prédite pour l'état de fonctionnement du premier dispositif, la valeur prédite étant prédite en utilisant le modèle de prédiction provisoire.

22. Modèle de correction configuré pour corriger une valeur prédite pour un état de fonctionnement prédit à partir de données de fonctionnement d'un premier dispositif, le modèle de correction amenant un ordinateur à fonctionner pour :
corriger une valeur prédite pour l'état de fonctionnement du premier dispositif, la valeur prédite étant prédite en utilisant un modèle de prédiction provisoire qui est entraîné par apprentissage automatique sur la base de données d'apprentissage incluant des données de fonctionnement et un état de fonctionnement d'un deuxième dispositif différent du premier dispositif,
générer un modèle de correction (20) configuré pour corriger la valeur prédite pour l'état de fonctionnement du premier dispositif, la valeur prédite étant prédite en utilisant le modèle de prédiction provisoire.
